# EUROPEAN PATENT SPECIFICATION

(11) **EP 2 917 416 B1**
(45) Date of publication and mention of the grant of the patent: **19.04.2017**
(21) Application number: 13747534.9
(22) Date of filing: 19.06.2013
(51) Int. Cl.: E02B 8/02, E02B 9/04, F03B 17/06, F03B 11/08, E02B 5/08

(54) **MOBILE MODULAR HYDROELECTRIC POWER PLANT**
MOBILES MODULARES HYDROELEKTRISCHES KRAFTWERK
CENTRALE HYDROÉLECTRIQUE MODULAIRE MOBILE

(30) Priority: 28.09.2012 SI 201200291
(43) Date of publication of application: 16.09.2015
(73) Proprietor: Artos Energija, Druzba Za Energetiko d.o.o., 1000 Ljubljana (SI)
(72) Inventor: TOS, Andrej, 1000 Ljubljana (SI)
(74) Representative: Grünecker Patent- und Rechtsanwälte PartG mbB
(86) International application number: PCT/SI2013/000039
(87) International publication number: WO 2014/051526

(56) References cited:
- WO-A2-2011/106806
- DE-A1- 3 813 958
- DE-C1- 4 241 854
- US-A1- 2008 231 057
- US-A1- 2009 175 723

## Description

### Field of Invention

The invention relates to a mobile modular hydroelectric power plant, hereinafter MHPP, which belongs to the field of energetics and is used for generating electricity.

### Prior Art

All small hydroelectric power plants are built in an indirect way: a stream flow of a river or brook is changed and part of the water is directed to a turbine either along a channel or pipe. A turbine with a housing is arranged in a turbine house that is normally masoned, in rare cases this is a prefabricated container arranged on a concrete slab. From here, the water is led via suction pipe to a discharge channel back to a river or brook.

Each small hydroelectric power plant is provided with a grid arranged in front of a channel or pipe in order to retain floating bodies. Downstream of the grid there is a sand trap that separates sand in order to avoid grinding of the turbine.

Small hydroelectric power plants are provided with various water turbines. Selection of a water turbine depends on water heads and flow rates.

Pelton turbines are used for huge heads of 1500 - 100 m and small flow rates of 0.05 - 1 m³/s. Francis turbines are applied for medium heads of 200-10m and medium flow rates of 0.5-5 m³. Kaplan turbines are used for small heads of 15-1.5 m and huge flow rates of 1-40 m³/s.

In small hydroelectric power plants also Banki turbines are used, on which our invention is based. These turbines are characterized by a very wide scope of use, for heads of 200-1.5 m and flow rates of 0.05-15 m³/s.

In current variants of Banki turbines, the water flow is regulated by a blade regulating valve.

Lamella turbines have recently been introduced and are used for low heads of 10-1 m and flow rates of 0.5-20 m³/s. A system of lifting a lamella turbine out of the water is used in the latter ones.

All small hydroelectric power plants share a common characteristic, namely they are built in a way that has a huge impact on the environment due to indirect use of a natural water stream.

Hydroelectric power plants are dimensioned based on water flow and water head, which means that each hydroelectric power plant is unique. This is linked to high investment costs and consequently high electricity price.

A technical problem that is not sufficiently solved is uneconomical energy use in very low heads, about below 3 m, and a huge environmental impact.

The technical problem solved by the present invention is an alternative approach to a design of a small hydroelectric power plant. A design of a mobile modular hydroelectric power plant of the invention makes direct use of the natural water stream. This is made possible due to a small hydroelectric power plant being arranged directly into a water stream (river or brook) and the water stream needs not be changed.

A constructional design of the small hydroelectric power plant of the invention is also different. The plant is assembled in a modular way, which means that depending on the width of a water stream, into which the mobile modular hydroelectric power plant of the invention is arranged, only individual modules of a concrete modular part and modules of a machine modular part are added. The modules of the machine part simultaneously also represent a dam that can be lifted as a lock. Due to the above mentioned facts, construction of a mobile modular hydroelectric power plant of the invention has a considerably smaller environmental impact compared to currently known small hydroelectric power plants.

According to document US 4053787 a hydroelectric power plant is assembled by inserting individual modules consecutively into a concrete block one after another. A separate chain of individual modules is obtained in this way.

Each module is a hydroelectric power plant per se, since it has a turbine and a generator. A generator is installed at a height above water level.

The major difference between our and the above-mentioned invention is that in our invention only turbine modules are assembled in a modular way, which means that only one generator is needed and not one generator for each turbine module. The generator is located in the turbine house module and is arranged under the water level.

A further difference is that we use a concrete modular part and not a fixed concrete block.

According to RU 2148184 C1 a hydroelectric power plant is built in a way that a support construction with water wheel frames is fastened between walls in a canyon. This construction with water wheels represents one module. These can be arranged one after another in direction of a water stream.

Kinetic energy of water is used in this case, i. e. the speed of water, so it is suitable for areas where the water stream gets narrower and the velocity consequently higher.

The main difference between our invention and the above-mentioned invention lies in that the machine modular part in our invention is assembled in a modular way, whereas it only represents one module in the mentioned document. Our invention uses the potential energy of water, i. e. difference in height between the upper and lower water levels.

US 2008/0231057 A1 discloses a water turbine generator station for installation in a river or a stream bed. The station includes a metal framework in which a turbine module and a power generation module are inserted. An inlet flow module provided at an upstream side of the turbine and power generation modules includes a debris guard that may be constructed from horizontally, vertically and/or obliquely positioned members.

DE 38 13 958 A1 discloses a hydroelectric power plant that may be used in river beds. The power plant comprises a number of modules, each having a turbine provided in a housing. A grid is obliquely provided upstream of the power plant for protection against floating material.

### Description of the Invention

The technical problem of the invention is solved by a mobile modular hydroelectric power plant according to claim 1. The dependent claims describe advantageous embodiments.

A machine modular part that can be assembled in a modular way includes at least one module of a turbine house, at least one turbine module, a grid and a rack with guides. Optionally, a mobile modular hydroelectric power plant can comprise at least one concrete modular part, into which a machine modular part of the MHPP is insertable. When a MHPP comprises a concrete modular part, the MHPP can optionally include two lifting modules at each side (at the turbine module side and at the turbine house side), said modules being detachably connected at one side with the turbine module and at the other with the turbine house module. Individual turbine modules of the machine modular part can be assembled with a detachable connection (screws, quick couplings ...) via connecting module.

A water stream bed can also be such to allow arrangement of a MHPP without a concrete modular part.

It is most economical to manufacture the concrete modular part from reinforced concrete; any other material can be used as well. Of course provided that the material can withstand the loads that occur during operation.

The number and the way of combination of individual modules depend on the width of a water stream, its flow rate and the bearing capacity of assembled modules subject to the water pressure. When narrower water streams are in question, a MHPP comprises a concrete modular part, into which several modules of a machine modular part are inserted. These modules are mutually combined in optional ways, wherein the most suitable or rather the most economical is a combination of several turbine modules.

When several turbine modules are combined, several module-connected generators can optionally be arranged in series in the machine module or only one large generator can be arranged.

In case of larger widths of a water stream and consequently larger flow rates and pressures, it is recommended that several assemblies of concrete modular parts and machine modular parts should be arranged, wherein each individual assembly comprises at least one concrete modular part with at least one machine modular part.

Optionally, a fish pass can be arranged additionally to a concrete modular part.

Installation of the MHPP of the invention causes considerably less environmental damage. A bottom of a water bed (of a river or brook), into which the MHPP of the invention is installed, needs to be levelled and two channels excavated, into which an assembled concrete modular part is inserted. The areas of insertion are then fixed with the excavated material. Yet even smaller environmental impact is caused when a MHPP is installed under bridges, where a bridge pillar functions as a side wall of a concrete modular part.

Each module of the modular part is a welded part consisting of several positions. The modules are provided with reinforcing ribs that increase the bearing capacity of the module.

Optionally, the machine modular part can be upgraded with a height module, if the shape of the river bed so permits. The height module raises the water level at the feed side of the MHPP which thus gets more power at the turbine and consequently greater production of electricity.

The invention will be described by way of embodiments and drawings representing in:
- Figure 1:: schematic presentation of a concrete modular part
- Figure 2:: schematic presentation of the first embodiment of a MHPP with one turbine module in a lowered position
- Figure 3:: schematic presentation of the first embodiment of a MHPP with one turbine module in a lifted position
- Figure 4:: schematic presentation of the second embodiment of a MHPP with two turbine modules in a lowered position
- Figure 5:: schematic presentation of the third embodiment of MHPP with four turbine modules and two turbine house modules
- Figure 6:: schematic presentation of the fourth embodiment of MHPP with two assemblies of the concrete modular part and the machine modular part in a combined position (one assembly in a lowered position and another assembly in a lifted position)
- Figure 7:: schematic presentation of a lifting module
- Figure 8:: presentation of a regulation gate in cross-section
- Figure 9:: presentation of a regulation gate in longitudinal cross-section.

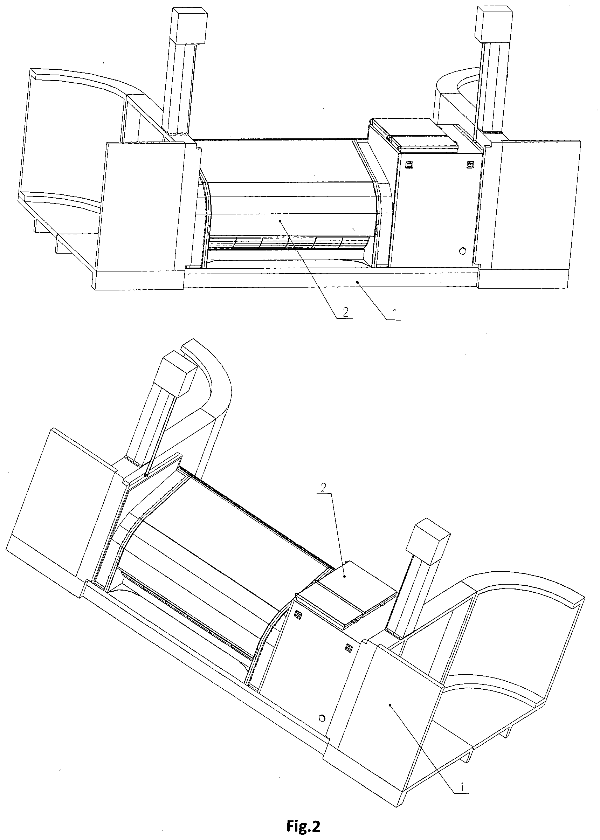

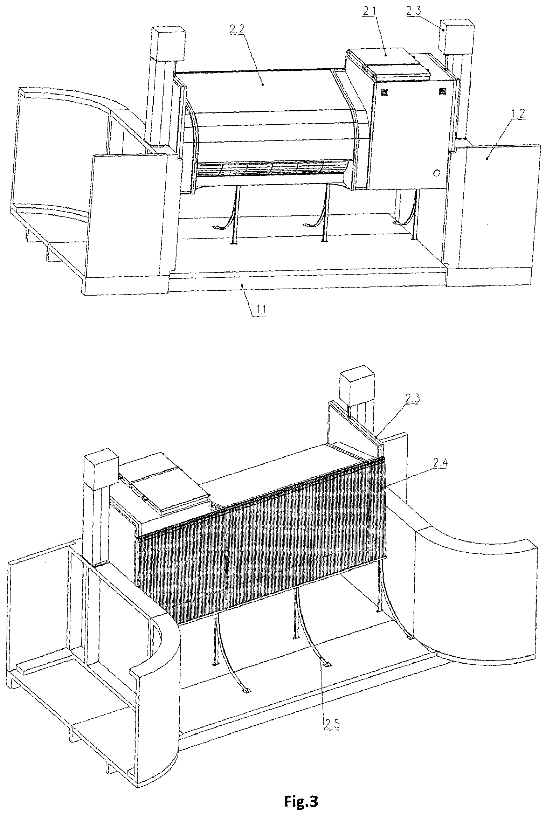

In the first embodiment shown in Figures 2 and 3 the MHPP comprises one concrete modular part (1) and one machine modular part (2). Figure 2 shows the MHPP in a lowered position, which means that the machine modular part is in the water stream, and Figure 3 shows it in a lifted position, which means that the machine modular part is lifted from the water stream.

The machine modular part (2) consists of a turbine house module (2.1), a turbine module (2.2), a lifting module (2.3) at each side, a grid (2.4) and a rack with guides (2.5).

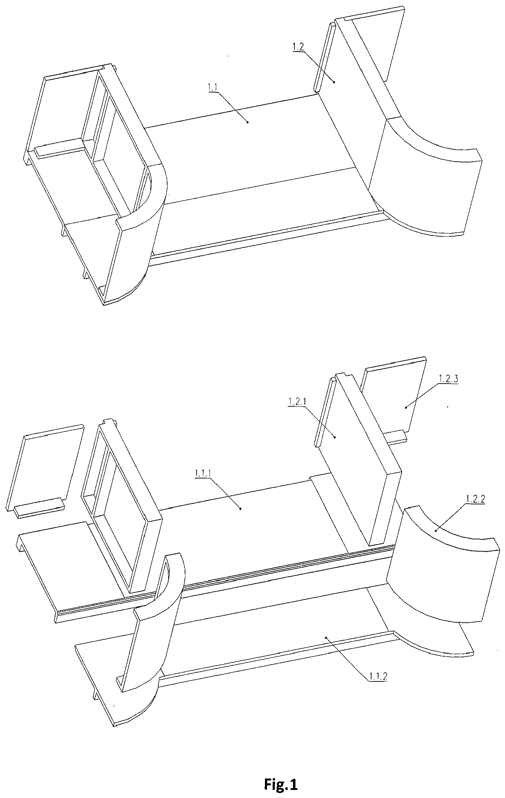

The concrete modular part (1), into which individual modules of the machine modular part (2) are insertable, comprises a modular bottom (1.1) made of two parts (1.1.1 and 1.1.2) for an easier transport and a simpler arrangement into a water stream. Modular side walls (1.2) are fastened to each side of the modular bottom (1.1). The side walls are made of an inserting side wall (1.2.2), a main side wall (1.2.1) with a tooth and a transversal side wall (1.2.3) as shown in Figure 1. The side walls are fastened to the bottom and one to another with a detachable connection.

A bottom of a water bed (of a river or brook), into which the small hydroelectric power plant of the invention is installed, needs to be levelled and two channels excavated, into which an assembled concrete modular part (1) is inserted. The installed parts are then fixed with the excavated material. The space between one and the other inserting side wall (1.2.2) and the transversal side wall (1.2.3) is also filled with the excavated material and levelled up to the top of the modular side wall (1.2). This provides additional stabilization of the concrete modular part (1) and prevents any sliding of the MHPP down the river bed.

The machine modular part (2) is inserted into thus prepared concrete modular part (1). Due to water pressure the machine modular part (2) presses against the tooth of the main side wall (1.2.1) which retains the machine modular part (2) in its place.

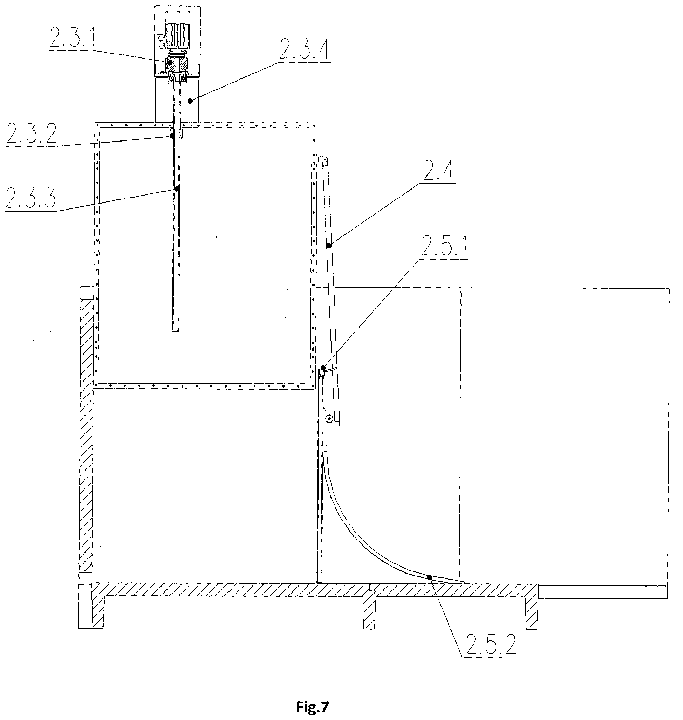

The tooth functions as a support to prevent the machine modular part (2) from moving due to water pressure, and in the case when the machine modular part (2) is lifted, the tooth serves as a guide. A lifting module (2.3) shown in Figure 7 comprises a drive (2.3.1), a trapeze spindle (2.3.2), a nut (2.3.3) and a pillar (2.3.4). The pillar is fastened with a detachable connection to the main side wall (1.2.1). On the top of the pillar (2.3.4) there is fastened the drive (2.3.1) with an adequate gear ratio and is for instance an electric motor with a reduction gear, an electric motor with a belt drive, with a chain drive, ... It is important that the position of the trapeze spindle (2.3.2) and that of the nut (2.3.3) is shifted in direction of the water stream from the centre of gravity of the machine modular part (2). In this way undesired oscillations in lifting and lowering the machine modular part (2) to and from water are avoided.

The water enters the turbine module (2.2), the inlet part of the turbine housing (2.2.1) and then falls through a nozzle to the blades of a Banki turbine (2.2.2), which causes it to rotate. The shaft of the turbine is provided with an attachable multiplicator with a generator (2.2.8). The multiplicator must have an adequate gear ratio, so that the generator rotates with proper rotation velocity. Instead with a multiplicator, the gear ratio can be achieved by a belt drive, a chain drive ...

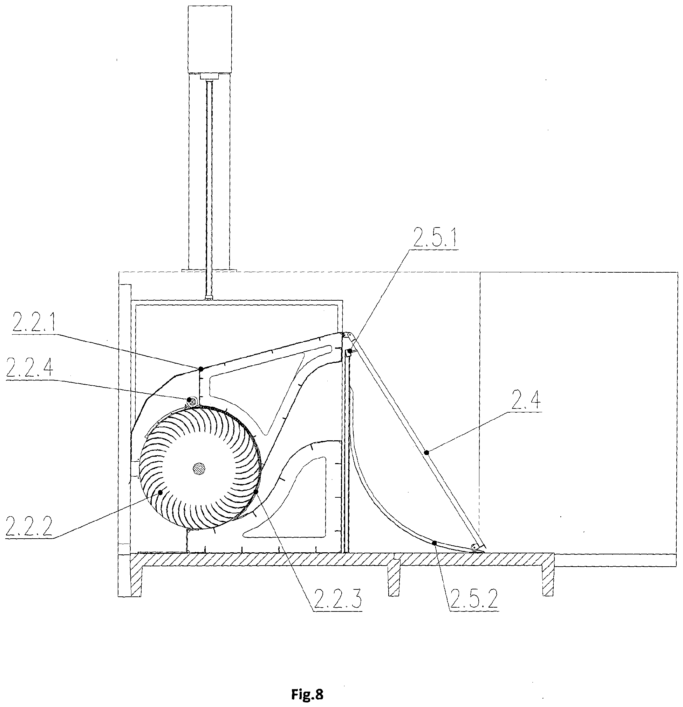

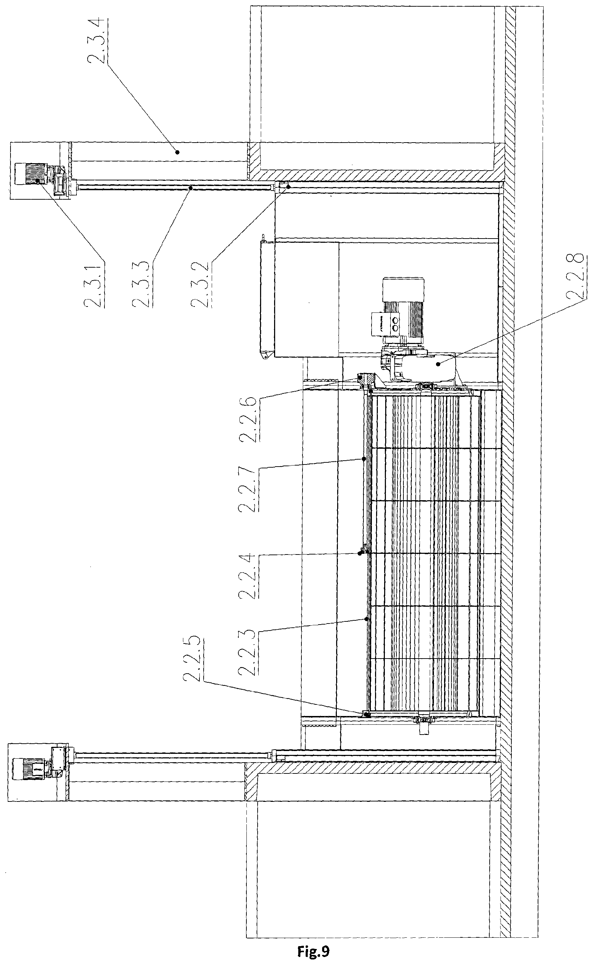

The water flow to the turbine is regulated by a regulation gate (2.2.3) of a semi-circular shape that glides on semi-circular guides (2.2.5). The regulation gate is driven by a drive (2.2.6) that can be an electric motor with a reduction gear and the latter drives a sprocket shaft (2.2.4) that engages with a roller chain (2.2.7) installed in the regulation gate (2.2.3) (Figures 8 and 9).

The turbine house module (2.1) has an auxiliary electricity source that is needed to start the MHPP up and to stop it. Upon start-up the electricity source helps open the regulation gate (2.2.3). When the Banki turbine (2.2.2) reaches nominal revolution speed, the auxiliary electricity source switches off automatically. Likewise, when the MHPP is stopped, the auxiliary electricity source helps shut the regulation gate (2.2.3). When the Banki turbine (2.2.2) is completely stopped, the two electric motors with the reduction gear (2.3.1) turn on and via trapeze spindle (2.3.2) and the nut (2.3.3) embedded in the lifting module (2.3) lift the machine modular part (2) of the MHPP (Figures 7 and 9). This is done in case of a torrent to avoid damage of the machine modular part (2), but is not necessary.

At the inlet side of the water a grid (2.4) is fastened over all modules of the machine modular part (2), said grid being articulated in a hinge.

In case of an increased flow rate, the remaining water that does not manage to flow through the Banki turbine (2.2.2), flows over the housing of the turbine module (2.2.1) automatically.

Floating bodies collected in front of the grid (2.4) are cleaned by partly shutting the regulation gate (2.2.3). The water upstream the MHPP rises and starts flowing over the modules of the machine modular part thus carrying away the floating bodies. The rest of the bodies that remain in the grid (2.4) and are not removed as described above, are removed by lifting the machine modular part (2) of the MHPP. When the machine modular part (2) is lifted, the rack (2.5) with guides does not lift from the water stream and is fastened to the modular bottom (1.1) with a detachable connection. While the machine modular part (2) is lifted, the rack (2.5.1) removes the trapped bodies. The grid (2.4) glides with rollers on semi-circular guides (2.5.2), the function of which guides is to maintain optimal distance between the rack (2.5.1) and the grid (2.4) (Figures 7 and 8).

Optionally, the machine modular part (2) can be upgraded with a height module, if the shape of the river bed so permits. The height module is fastened to the machine modular part with a detachable connection. The height module raises the water level at the feed side of the MHPP which thus gets more power at the turbine and consequently greater production of electricity.

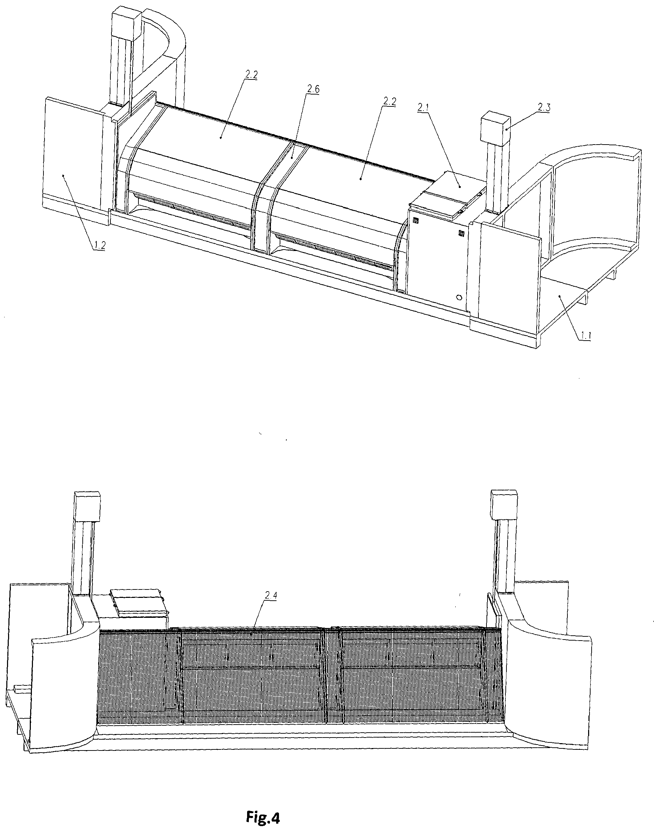

In the second embodiment shown in Figure 4 the MHPP consists of one concrete modular part (1) and one machine modular part (2) comprising a turbine house module (2.1), two turbine modules (2.2), a connecting module (2.6), a lifting module (2.3) at each side, a grid (2.4) and a rack with guides (2.5). If several turbine modules (2.2) are connected between each other, the shafts of the Banki turbine are mutually connected with a shaft link such as flexible coupling, homokinetic joint, Cardan, etc. In each turbine module the regulation gate (2.2.3) is regulated by its own drive (2.2.6).

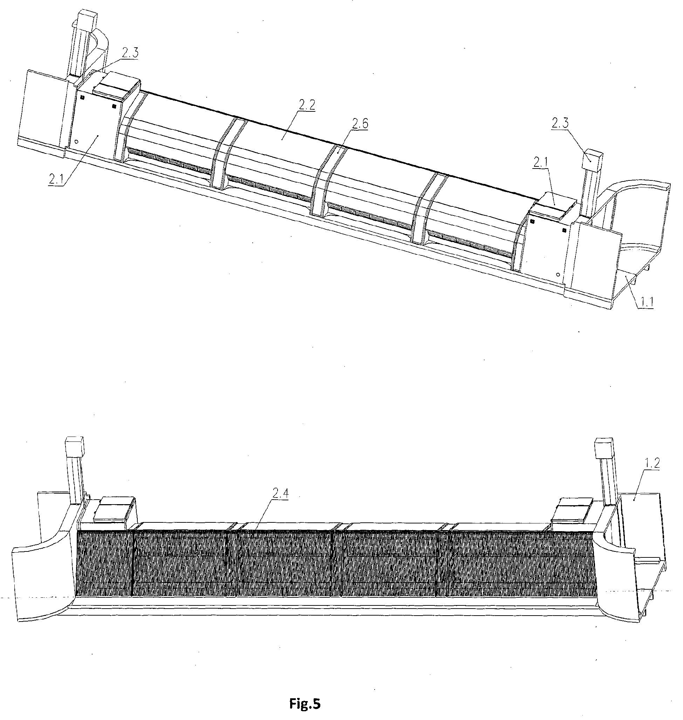

In the third embodiment shown in Figure 5, the MHPP consists of one concrete modular part (1) and one machine modular part (2) comprising two turbine house modules (2.1), four turbine modules (2.2), connecting modules (2.6), a lifting module (2.3) at each side, a grid (2.4) and a rack with guides (2.5).

The shafts of the Banki turbine are connected with a shaft link. In each turbine module the regulation gate (2.2.3) is regulated by its own drive (2.2.6).

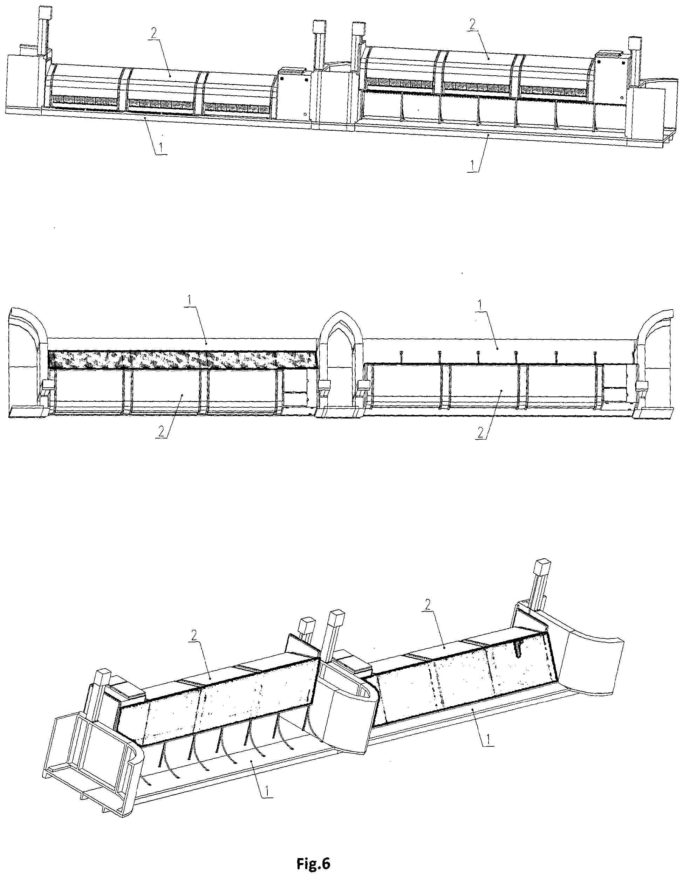

In the fourth embodiment shown in Figure 6, the MHPP consists of two assemblies, each including one concrete modular part (1) with an inserted machine modular part (2). The machine modular part consists of a turbine house module (2.1), three turbine modules (2.2), linking modules (2.6), a lifting module (2.3) at each side, a grid (2.4) and a rack with guides (2.5). When the MHPP consists of several assemblies, the machine modular parts (2) of individual assemblies can be either in the lifted or lowered position.

The number of assemblies and the number and manner of combining modules of the machine modular part (2) can differ from those shown in the embodiments. The MHPP can also be installed into a water stream without lifting modules and can thus not be lifted. However, it is still mobile and can be placed to another position with a crane truck. As already mentioned, we are limited by the width of a river and its flow rate as well as by the bearing capacity of assembled modules that are subject to water pressure.

The MHPP is of a complete modular design. This type of construction is a direct exploitation of a natural water stream for the generation of electricity and has a minor environmental impact. Further, the water potential is used economically to obtain electricity.

## Claims

1. A mobile modular hydroelectric power plant comprising at least one machine modular part (2) that can be assembled in modules and includes at least one turbine house module (2.1), at least one turbine module (2.2) and a grid (2.4),
**characterized by** a first end of the the grid (2.4) being fastened to the modules (2.1, 2.2) of the machine modular part (2) by a hinge,
by lifting modules (2.3) adapted to lift the machine modular part (2) between a lowered position and a lifted position, and
by a rack (2.5.1) with semi-circular guides (2.5.2), wherein a second end of the grid (2.4) opposite the first end glides with rollers on said semi-circular guides (2.5.2) such that, during lifting of the machine modular part (2) from the lowered position to the lifted position, the grid (2.4) is pivoted towards the modules (2.1, 2.2) of the machine modular part (2).

2. Mobile modular hydroelectric power plant according to claim 1, **characterized by** at least one concrete modular part (1), into which the machine modular part (2) is inserted.

3. Mobile modular hydroelectric power plant according to claim 2, **characterized in that** the concrete modular part (1) consists of a modular bottom (1.1) made of two parts (1.1.1, 1.1.2) and at each end of modular side walls (1.2) composed of an inserting side wall (1.2.2), a main side wall (1.2.1) with a tooth and a transversal side wall (1.2.3).

4. Mobile modular hydroelectric power plant according to claim 3, **characterized in that** the tooth of the main side wall (1.2.1) is a support to the machine modular part (2).

5. Mobile modular hydroelectric power plant according to any one of the preceding claims, **characterized in that** turbine modules (2.2) of the machine modular part (2) are mutually connected with a detachable link via intermediate module (2.6).

6. Mobile modular hydroelectric power plant according to any one of the preceding claims, **characterized in that** the modules (2.1, 2.2) of the machine modular part (2) are mutually combined in any way.

7. Mobile modular hydroelectric power plant according to any one of the preceding claims, **characterized in that** the water flow to the turbine (2.2.2) is regulated by a regulation gate (2.2.3) of a semi-circular shape that glides on semi-circular guides (2.2.5), wherein the regulation gate (2.2.3) is driven by a drive (2.2.6) that is an electric motor with a reduction gear and the latter drives a sprocket shaft (2.2.4) that engages with a roller chain (2.2.7) installed in the regulation gate (2.2.3).

8. Mobile modular hydroelectric power plant according to claim 7, **characterized in that** in the case when several turbine modules (2.2) are connected with each other, the shafts of the turbine are mutually connected with a shaft link and the regulation gate (2.2.3) in each turbine module (2.2) is regulated by its own drive (2.2.6).

9. Mobile modular hydroelectric power plant according to any one of the preceding claims, **characterized in that** two lifting modules (2.3) are detachably connected at one side with the turbine module (2.2) and at the other with the turbine house module (2.1).

10. Mobile modular hydroelectric power plant according to any one of the preceding claims, **characterized in that** the lifting modules (2.3) consist of a trapeze nut (2.3.3), through which a trapeze spindle (2.3.2) connected with a drive (2.3.1) passes, and the position of the trapeze spindle (2.3.2) and that of the nut (2.3.3) is shifted in direction of a water stream from the centre of gravity of the machine modular module (2).

11. Mobile modular hydroelectric power plant according to any one of the preceding claims, **characterized in that** it comprises several assemblies of concrete modular parts (1) and machine modular parts (2), wherein each individual assembly comprises a concrete modular part (1) with at least one machine modular part (2).

## Patentansprüche

1. Mobiles modulares hydroelektrisches Kraftwerk, umfassend wenigstens einen modularen Maschinenteil (2), der in Modulen zusammengesetzt werden kann und wenigstens ein Turbinengehäusemodul (2.1), wenigstens ein Turbinenmodul (2.2) und ein Gitter (2.4) umfasst,
**gekennzeichnet dadurch, dass**
ein erstes Ende des Gitters (2.4) an den Modulen (2.1, 2.2) des modularen Maschinenteils (2) durch ein Scharnier angebracht ist,
durch Hebemodule (2.3), die dazu eingerichtet sind, den modularen Maschinenteil (2) zwischen einer abgesenkten Position und einer angehobenen Position anzuheben, und
durch ein Gestell (2.5.1) mit halbkreisförmigen Führungen (2.5.2), wobei ein zweites Ende des Gitters (2.4), das dem ersten Ende gegenüberliegt, mit Rollen auf den Halbkreisförmigen Führungen (2.5.2) derart gleitet, dass während des Anhebens des modularen Maschinenteils (2) aus der abgesenkten Position in die angehobene Position das Gitter (2.4) zu den Modulen (2.1, 2.2) des modularen Maschinenteils (2) geschwenkt wird.

2. Mobiles modulares hydroelektrisches Kraftwerk nach Anspruch 1, **gekennzeichnet durch** wenigstens einen modularen Betonteil (1), in den der modulare Maschinenteil (2) eingefügt ist.

3. Mobiles modulares hydroelektrisches Kraftwerk nach Anspruch 2, **dadurch gekennzeichnet, dass** der modulare Betonteil (1) aus einem modularen Boden (1.1), der aus zwei Teilen (1.1.1, 1.1.2) gefertigt ist, und an jedem Ende aus modularen Seitenwänden (1.2) besteht, die aus einer eingefügten Seitenwand (1.2.2) einer Hauptseitenwand (1.2.1) mit einem Zahn und einer transversalen Seitenwand (1.2.3) bestehen.

4. Mobiles modulares hydroelektrisches Kraftwerk nach Anspruch 3, **dadurch gekennzeichnet, dass** der Zahn der Hauptseitenwand (1.2.1) eine Halterung für den modularen Maschinenenteil (2) ist.

5. Mobiles modulares hydroelektrisches Kraftwerk nach einem der vorhergehenden Ansprüche, **dadurch gekennzeichnet, dass** die Turbinenmodule (2.2) des modularen Maschinenteils (2) wechselseitig mit einer lösbaren Verbindung über das Zwischenmodul (2.6.) verbunden sind.

6. Mobiles modulares hydroelektrisches Kraftwerk nach einem der vorhergehenden Ansprüche, **dadurch gekennzeichnet, dass** die Module (2.1, 2.2) des modularen Maschinenteils (2) wechselseitig auf beliebige Weise kombiniert sind.

7. Mobiles modulares hydroelektrisches Kraftwerk nach einem der vorhergehenden Ansprüche, **dadurch gekennzeichnet, dass** der Wasserfluss zu der Turbine (2.2.2) durch ein Regulierschütz (2.2.3) einer halbkreisförmigen Gestalt reguliert wird, die auf halbkreisförmigen Führungen (2.2.5) gleitet, wobei das Regulierschütz (2.2.3) von einem Antrieb (2.2.6) angetrieben wird, der ein Elektromotor mit einem Untersetzungsgetriebe ist, und letztgenanntes eine Ritzelwelle (2.2.4) antreibt, die mit einer Rollenkette (2.2.7) in Eingriff steht, die in dem Regulierschütz (2.2.3) angebracht ist.

8. Mobiles modulares hydroelektrisches Kraftwerk nach Anspruch 7, **dadurch gekennzeichnet, dass** für den Fall, dass zahlreiche Turbinenmodule (2.2) miteinander verbunden sind, die Wellen der Turbine wechselseitig mit einem Wellenverbindungsstück verbunden sind und das Regulierschütz (2.2.3) in jedem Turbinenmodul (2.2) durch seinen eigenen Antrieb (2.2.6) reguliert wird.

9. Mobiles modulares hydroelektrisches Kraftwerk nach einem der vorhergehenden Ansprüche, **dadurch gekennzeichnet, dass** zwei Hebemodule (2.3) lösbar auf einer Seite mit dem Turbinenmodul (2.2) und auf der anderen Seite mit dem Turbinengehäusemodul (2.1) verbunden sind.

10. Mobiles modulares hydroelektrisches Kraftwerk nach einem der vorhergehenden Ansprüche, **dadurch gekennzeichnet, dass** die Hebemodule (2.3) aus einer Trapezgewindemutter (2.3.3) bestehen, durch die eine Trapezspindel (2.3.2) verläuft, die mit einem Antrieb (2.3.1) verbunden ist, und die Position der Trapezspindel (2.3.2) und jene der Gewindemutter (2.3.3) in die Richtung eines Wasserstroms zu dem Schwerpunkt des modularen Maschinenteils (2) verschoben ist.

11. Mobiles modulares hydroelektrisches Kraftwerk nach einem der vorhergehenden Ansprüche, **dadurch gekennzeichnet, dass** es zahlreiche Anordnungen von modularen Betonteilen (1) und modularen Maschinenteilen (2) umfasst, wobei jede individuelle Anordnung einen modularen Betonteil (1) mit wenigstens einem modularen Maschinenteil (2) umfasst.

## Revendications

1. Centrale hydroélectrique modulaire mobile comprenant au moins une partie modulaire de machine (2) qui peut être assemblée en modules et inclut au moins un module de logement de turbine (2.1), au moins un module de turbine (2.2), et une grille (2.4),
**caractérisée par**
une première extrémité de la grille (2.4) étant fixée aux modules (2.1, 2.2) de la partie modulaire de machine (2) par une charnière,
par des modules de levage (2.3) adaptés pour soulever la partie modulaire de machine (2) entre une position abaissée et une position relevée, et
par un râtelier (2.5.1) avec des guides semi-circulaires (2.5.2), où une seconde extrémité de la grille (2.4) opposée à la première extrémité glisse avec des rouleaux sur lesdits guides semi-circulaires (2.5.2), de manière à ce que, lorsque la partie modulaire de machine (2) soulevée depuis la position abaissée vers la position relevée, la grille (2.4) pivote vers les modules (2.1, 2.2) de la partie modulaire de machine (2).

2. Centrale hydroélectrique modulaire mobile selon la revendication 1, **caractérisée par** au moins une partie modulaire en béton (1), dans laquelle la partie modulaire de machine (2) est insérée.

3. Centrale hydroélectrique modulaire mobile selon la revendication 2, **caractérisée en ce que** la partie modulaire en béton (1) consiste en un fond modulaire (1.1) composé de deux parties (1.1.1, 1.1.,2), et, à chaque extrémité de parois latérales modulaires (1.2), composé d'une paroi latérale d'insertion (1.2.2), d'une paroi latérale principale (1.2.1) avec une denture et d'une paroi latérale transversale (1.2.3).

4. Centrale hydroélectrique modulaire mobile selon la revendication 3, **caractérisé en ce que** la denture de la paroi latérale principale (1.2.1) est un support pour la partie modulaire de machine (2).

5. Centrale hydroélectrique modulaire mobile selon l'une quelconque des revendications précédentes, **caractérisé en ce que** les modules de turbine (2.2) de la partie modulaire de machine (2) sont mutuellement connectées à un maillon détachable via un module intermédiaire (2.6).

6. Centrale hydroélectrique modulaire mobile selon l'une quelconque des revendications précédentes, **caractérisé en ce que** les modules (2.1, 2.2) de la partie modulaire de machine (2) sont mutuellement combinés d'une quelconque façon.

7. Centrale hydroélectrique, modulaire mobile selon l'une quelconque des revendications précédentes, **caractérisé en ce que** le débit d'eau vers la turbine (2.2.2) est régulé par une vanne de régulation (2.2.3) de forme semi-circulaire qui glisse sur des guides semi-circulaires (2.2.5), où la vanne de régulation (2.2.3) est entraînée par un mécanisme d'actionnement (2.2.6) qui est un moteur électrique avec un réducteur et ce dernier entraîne un arbre de pignon (2.2.4) qui s'engage avec une chaîne à rouleaux (2.2.7) installée dans la vanne de régulation (2.2.3).

8. Centrale hydroélectrique modulaire mobile selon la revendication 7, **caractérisée en ce que** dans le cas où plusieurs modules de turbines (2.2) sont connectés les uns aux autres, les arbres de la turbine sont mutuellement connectés avec un maillon d'arbre et la vanne de régulation (2.2.3) dans chaque module de turbine (2.2) est régulée par son propre mécanisme d'actionnement (2.2.6).

9. Centrale hydroélectrique modulaire mobile selon l'une quelconque des revendications précédentes, **caractérisée en ce que** deux modules de levage (2.3) sont connectés de manière détachable d'un côté avec le module de turbine (2.2) et de l'autre côté avec le module de bâtiment turbine (2.1).

10. Centrale hydroélectrique modulaire mobile selon l'une quelconque des revendications précédentes, **caractérisée en ce que** les modules de levage (2.3) consistent en un écrou trapézoïdal (2.3.3), à travers lequel passe une broche trapézoïdale (2.3.2) connectée avec un mécanisme d'entraînement (2.3.1), et la position de la broche trapézoïdale (2.3.2) et celle de l'écrou (2.3.3) est décalée dans une direction d'un courant d'eau à partir du centre de gravité de la partie modulaire de machine (2).

11. Centrale hydroélectrique modulaire mobile selon l'une quelconque des revendications précédentes, **caractérisé en ce qu'**il comprend plusieurs ensembles de parties modulaires en béton (1) et de parties modulaires de machine (2), où chaque ensemble individuel comprend une partie modulaire en béton (1) avec au moins une partie modulaire de machine (2).
